# EUROPEAN PATENT SPECIFICATION

(11) **EP 1 850 559 B1**
(45) Date of publication and mention of the grant of the patent: **07.12.2011**
(21) Application number: 06252228.9
(22) Date of filing: 26.04.2006
(51) Int. Cl.: H04L 12/28

(54) **Method and system for seamless handover to a portable internet network by keeping the same IP address**
Verfahren und System zum nahtlosen Weiterreichen in ein Portable Internet Netzwerk durch Beibehalten der gleichen IP Adresse
Procédé et appareil de transfert continu vers un réseau "Portable Internet" en gardant la même adresse IP

(43) Date of publication of application: 31.10.2007
(73) Proprietor: SK Telecom Co., Ltd., Seoul (KR)
(72) Inventor: Park, Seongsoo, Seoul (KR); Lee, Donghahk, 809-1101, Imaechon Jinheung Apt., Seongnam-si Gyeonggi-do (KR); Chung, Wonsuk, 204-1905, Dongsomun Hanjin Apts., Seoul (KR)
(74) Representative: Neobard, William John

(56) References cited:
- EP-A- 1 392 077
- US-A1- 2005 074 015
- US-A1- 2006 077 934
- SHIAO-LI TSAO ET AL: "VGSN: a gateway approach to interconnect UMTS/WLAN networks" PERSONAL, INDOOR AND MOBILE RADIO COMMUNICATIONS, 2002. THE 13TH IEEE INTERNATIONAL SYMPOSIUM ON SEPT. 15-18, 2002, PISCATAWAY, NJ, USA,IEEE, vol. 1, 15 September 2002 (2002-09-15), pages 275-279, XP010614230 ISBN: 0-7803-7589-0
- IEEE: "Amendment and Corrigendum to IEEE Std 802.16-2004" IEEE STD 802.16E-2005 AND IEEE STD 802.16-2004/COR1-2005, [Online] 28 February 2006 (2006-02-28), pages 684-697, XP002387596 IEEE, 3 Park Avenue, New York, NY 10016-5997, USA Retrieved from the Internet: URL:http://ieeexplore.ieee.org/iel5/10676/ 33683/01603394.pdf?isnumber=33683&arnumber =1603394> [retrieved on 2006-06-27]
- UNKNOWN: "IEEE 802.16 / WiMAX" DAS ELEKTRONIK KOMPENDIUM, [Online] 30 September 2004 (2004-09-30), XP002387597 Internet Retrieved from the Internet: URL:http://www.elektronik-kompendium.de/si tes/net/0904211.htm> [retrieved on 2006-06-28]
- "Digital cellular telecommunications system (Phase 2+); Universal Mobile Telecommunications System (UMTS); General Packet Radio Service (GPRS) Service description; Stage 2 (3GPP TS 23.060 version 4.8.0 Release 4); ETSI TS 123 060" ETSI STANDARDS, EUROPEAN TELECOMMUNICATIONS STANDARDS INSTITUTE, SOPHIA-ANTIPO, FR, vol. 3-SA2, no. V480, June 2003 (2003-06), XP014007569 ISSN: 0000-0001
- SIDDIQUI ET AL: "Mobility management across hybrid wireless networks: Trends and challenges" COMPUTER COMMUNICATIONS, ELSEVIER SCIENCE PUBLISHERS BV, AMSTERDAM, NL, vol. 29, no. 9, 6 October 2005 (2005-10-06), pages 1363-1385, XP005432866 ISSN: 0140-3664
- SANMATEU A ET AL: "Seamless mobility across IP networks using Mobile IP" COMPUTER NETWORKS, ELSEVIER SCIENCE PUBLISHERS B.V., AMSTERDAM, NL, vol. 40, no. 1, September 2002 (2002-09), pages 181-190, XP004374129 ISSN: 1389-1286
- PATRICK SCHNABEL: "Netzwerktechnik-Fibel" DAS ELEKTRONIK KOMPENDIUM, [Online] 30 September 2005 (2005-09-30), XP002387598 Retrieved from the Internet: URL:http://www.elektronik-kompendium.de/sh op/index.php?buecher/netzwerktechnik-fibel &ref=bottom> [retrieved on 2006-06-28]

## Description

The present invention relates to a method and a system for registering an Internet Protocol (hereinafter also referred to as IP) address in a Portable Internet (hereinafter also referred to as PI) network when the Portable Internet network interworks with a different type of network.

Embodiments relate to a method and a system for registering an IP address in a Portable Internet network when the Portable Internet network interworks with a different type of network, in which, when an existing network such as a Code Division Multiple Access (hereinafter, referred to as CDMA) 2000 network currently having a sufficient infra-structure interworks with the Portable Internet network, a Personal Subscriber Station (hereinafter, referred to as PSS) provides the Portable Internet network with information on an IP address used with a previous network, so that the Portable Internet network can continue a communication service with the previous network without changing an IP address.

With the rapid development of communication technology and the development of various content, various wireless communication services using a wireless network have been provided. The most basic wireless communication service is a wireless voice communication service for providing voice communication to mobile communication terminal users in a wireless manner, which has a characteristic of providing the service to the users regardless of time and place. Further, the wireless communication service supplements a voice communication service by providing a text message service. Recently, a wireless Internet service has emerged, which provides an Internet communication service to mobile communication terminal users through a wireless communication network.

With the development of mobile communication technology as described above, a service provided by a CDMA mobile communication system is being developed into a multimedia communication service capable of transmitting data such as circuit data and packet data, as well as voice data.

With the recent development of information communication, International Mobile Telecommunication (hereinafter, referred to as IMT)-2000, e.g., a CDMA 2000 1X, 3X and EV-DO, a Wideband CDMA (hereinafter, referred to as WCDMA), etc., has been commercialized, which corresponds to the 3^{rd} mobile communication system and has been established as a standard by an International Telecommunication Union-Radio communication (ITU-R). An IMT-2000 corresponds to a service capable of providing a wireless Internet service at a maximum transmission speed of 144 Kbps far faster than 14.4 Kbps or 56 Kbps, which is the data transmission speed supported by an Interim Standard (hereinafter, referred to as IS)-95A network or an IS-95B network, by means of an IS-95C network evolved from the existing IS-95A network and IS-95B network. In particular, an IMT-2000 service is used, so that the quality of an existing voice and Wireless Application Protocol (WAP) service can be improved and various multimedia services, e.g., Audio On Demand (AOD), Video On Demand (VOD), etc., can be provided at higher speeds.

Wireless Internet technology currently used across the world may be largely classified into the 3G cellular system based on the portable telephone network as described above and a Wireless Local Access Network (WLAN) based on IP-based packet transmission.

The existing cellular system supports excellent mobility and handoff, ensures a data transmission speed necessary for voice communication, and additionally supports a packet data service. However, the existing mobile communication system has drawbacks that service charges for the wireless Internet are high due to high base station construction cost, available content is restricted due to small size of the display on the terminal, and there is a limitation in ensuring a sufficient transmission speed for a packet data service.

In the case of the WLAN, a superior data transmission speed is attainable as compared with the cellular system. However, there may be a problem in mobility due to radio wave interference. Further, there is a limitation in providing a public service due to narrow service coverage, etc.

Accordingly, a Portable Internet service system has emerged, in order to support the mobility and handoff of the cellular system while providing a transmission speed as fast as that of the WLAN, and to provide an ultra high-speed wireless Internet service at low cost.

In a Portable Internet service also referred to as a 3.5G, a user can access the Internet by using various types of portable PSSs, such as notebooks, Personal Digital Assistants (hereinafter, referred to as PDAs) and handheld PCs, in stationary indoor and outdoor environments and mobile environments involving movement at various speeds, thereby using various information and content. Further, the Portable Internet service provides mobility of 60 km/h, which is an IP-based wireless data service having an upload/download asymmetric transmission characteristic in which a download transmission speed is 24.8 Mbps and an upload transmission speed is 5.2 Mbps.

A Portable Internet system uses a 2.3 GHz frequency band, and employs an Orthogonal Frequency Division Multiple Access (hereinafter, referred to as OFDMA), which are parts of the next generation core technology, a Time Division Multiple Access (hereinafter, referred to as TDMA), a Time Division Duplexing (hereinafter, referred to as TDD), etc. The OFDMA/TDMA is a multiple access scheme similar to the TDMA which allocates all sub-carriers in the entire bandwidth to one user during a predetermined time period and then allocates all sub-carriers to another user during the subsequent predetermined time period. Further, for efficient use of radio resources, standardization for employing technology, such as an Adaptive Modulation coding (AMC), a Multi-Input Multi-Output (MIMO), and a smart antenna, is currently under process.

With the introduction of the new system as described above, interworking functionality between an existing network and a new network is required. Since users request various services not bound to a specific network type, an interworking network for satisfying the requirements of the users has been constructed. For the construction of such an interworking network, research into 3G mobile communication and WLAN has been actively pursued. However, these networks have been independently developed and involve different standards. Accordingly, for an interworking between these networks, it is necessary to consider various items such as architectures, protocol structures, mobility, Quality of Service (QoS), authentication, security and accounting, and further, revise and supplement for each item should be accompanied.

From the perspective of a network, a 3G-WLAN interworking scheme may be classified into a loosely-coupled interworking scheme and a tightly-coupled interworking scheme.

In the loosely-coupled interworking scheme, a 3G network and a WLAN separately exist and provide independent services, and a gateway for the interworking of authentication and accounting is additionally provided in order to perform a roaming service which requires interworking. Further, the mobility between the 3G network and the WLAN is provided based on a Mobile IP (hereinafter, referred to as MIP).

In the tightly-coupled interworking scheme, a WLAN Access Point (AP) is wired to a 3G data core network and enables integrated user authentication/accounting and integrated network management to be performed. Further, it is easy to provide a continuous service, as compared with the MIP-based loosely-coupled interworking scheme.

The loosely-coupled interworking scheme and the tightly-coupled interworking scheme may also be applied to a 3G network such as a CDMA 2000 network, and a Portable Internet network. However, in a system employing the loosely-coupled interworking scheme, 3G network users and Portable Internet users are independently authenticated, and accounting and mobility support management policies are separately maintained. In such a case, it is necessary to introduce a mobile IP function in order to support mobility between networks. Further, in a system employing the tightly-coupled interworking scheme, a 3G core network is directly integrated with a Portable Internet network. That is, the Portable Internet network is directly connected to apparatuses of the 3G core network. Accordingly, the Portable Internet network functions as one 3G access network in the 3G core network.

In the Portable Internet network, an IP address must be basically assigned to a PSS. Therefore, when the Portable Internet network interworks with a different type of network, processing of an IP address used for the different type of network may be an issue. Herein, if the two networks interwork with each other without change in an IP address, connectivity of a service is maintained, which results in efficiency. Accordingly, it is necessary to provide an interworking scheme that does not require the change in an IP address. For this, definition of protocols is also necessary.

"VGSN: a gateway approach to interconnect UMTS/WLAN networks" in Personal, indoor and mobile radio communications 2002 (13th IEEE Symposium, vol. 1, pages 275-279) discloses a method and system for seamless roaming between heterogeneous wireless networks.

EP 1 392 077 discloses a method for managing the Quality of Service levels during transfer between a wireless local area network and a mobile telephone network.

US 2006/0077934 discloses a handoff system and method of dual mode mobile for connecting mobile communication system and wireless network.

The invention is recited in the appended claims.

The above and other objects, features and advantages of the present invention will be more apparent from the following detailed description taken in conjunction with the accompanying drawings, in which:
FIG. 1 is a block diagram illustrating a network structure for a loosely-coupled interworking scheme between a Portable Internet network and a different type of network embodying the present invention;
FIG. 2a is a diagram partially illustrating the format of a registration request message according to the prior art;
FIG. 2b is a diagram partially illustrating the format of a registration request message embodying the present invention;
FIG. 3 is a block diagram illustrating a network structure for a tightly-coupled interworking scheme between a Portable Internet network and a different type of network embodying the present invention;
FIG. 4 is a flow diagram schematically illustrating a process for registering an IP address in a Portable Internet network when the Portable Internet network interworks with a different type of network; and
FIG. 5 is a ladder diagram illustrating an originating procedure on a PSS when a Portable Internet network interworks with a different type of network.

In the various figures, like reference signs indicate like parts.

In the following description of the present invention, a detailed description of known functions and configuration incorporated herein will be omitted when it may make the subject matter of the present invention unclear.

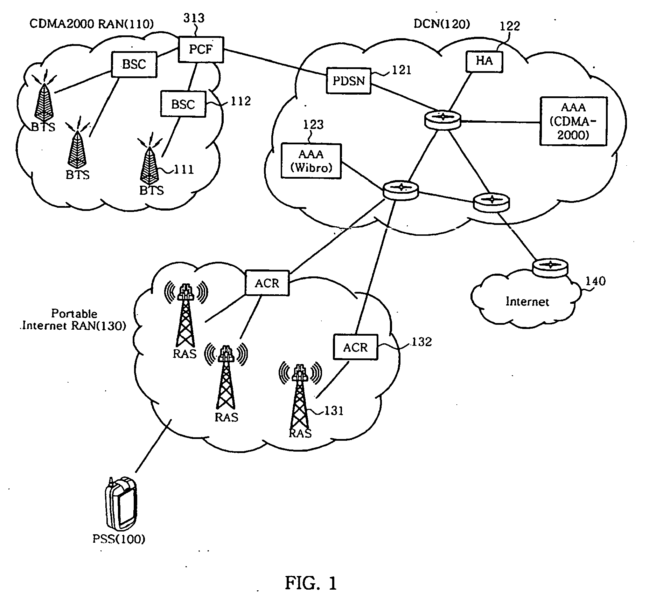

Referring to FIG. 1, a network structure may include a CDMA-2000 Radio Access Network (hereinafter, referred to as RAN) 110, which corresponds to the different type of network, a Data Communication Network (hereinafter, referred to as DCN) 120, a Portable Internet RAN 130, etc. The CDMA-2000 RAN 110 may include elements such as a Base Transceiver Station (hereinafter, referred to as BTS) 111, a Base Station Controller (hereinafter, referred to as BSC) 112, a Packet Control Function (hereinafter, referred to as PCF) 113, etc. The DCN 120 may include elements such as a Packet Data Serving Node (hereinafter, referred to as PDSN) 121, a Home Agent (hereinafter, referred to as HA) 122, an Authentication, Authorization, Accounting (hereinafter, referred to as AAA) server 123, etc. The Portable Internet RAN 130 may include elements such as Radio Access Stations (hereinafter, referred to as RASs) 131, an Access Control Router (hereinafter, referred to as ACR) 132 for accommodating the RASs 131.

When the Portable Internet network interworks with the different type of network, a system is provided for performing an IP registration without change in an IP address. Embodiments include an IP registration method using the same. The different type of network may include a CDMA-2000 network, a Global System for Mobile (hereinafter, referred to as GSM) network, a WCDMA network, a WLAN network, etc., but is not limited to these networks. In the present specification, the CDMA-2000 network is used as an example of "a different type of network", but the different type of network is not limited to the CDMA-2000 network.

A PSS 100 represents a mobile communication terminal that accesses a Portable Internet system and uses an ultra high-speed wireless Internet service. The PSS 100 performs a low power Radio Frequency (RF)/Intermediate Frequency (IF) module and controller function, a Media Access Control (hereinafter, referred to as MAC) frame variable control function according to service characteristics and radio wave conditions, a handoff function, authentication and encryption function, etc.

When the PSS 100 accesses the Portable Internet RAN 130 from the CDMA-2000 RAN 110, the PSS 100 transmits a registration request message to the RAS 131. The registration request message includes both information on an assignment method of an IP address in the CDMA-2000 RAN 110, and information on a currently assigned IP address. The registration request message includes information on a method by which an IP address has been assigned to the PSS 100, information on an IP address assigned to the PSS 100, ARQ information, IP version and vender ID information, etc.

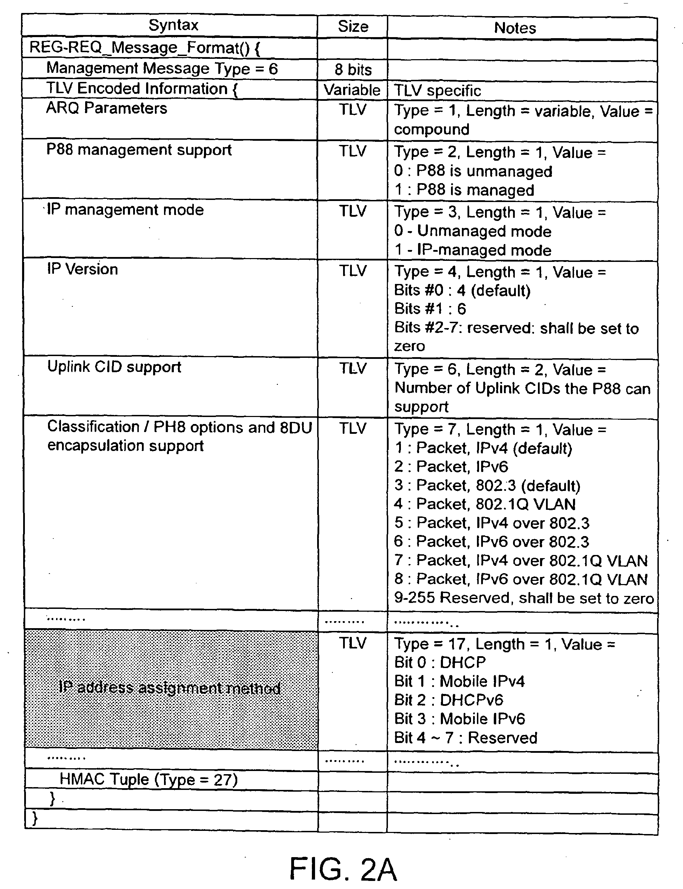

Referring to the shaded portion of FIG. 2a, it can be understood that the prior art registration request message includes information on an IP address assignment method. The IP address assignment method may include a Dynamic Host Configuration Protocol (hereinafter, referred to as DHCP), a mobile Ipv4, a DHCPv6, a mobile Ipv6, etc. Referring to the field regarding the IP address assignment method in FIG. 2a, the field includes only information on an IP assignment method to be used by the PSS 100. However, according to the present invention, in a situation where handoff, etc., from the CDMA-2000 RAN 110 is required, the IP address having been used in the previous network is utilized in consideration of the continuity of a service, instead of reassigning an IP address. Accordingly, it is necessary to define a field regarding the use of a static IP address in the field regarding the known IP address assignment method, and the field must include detailed information on the previous IP address.

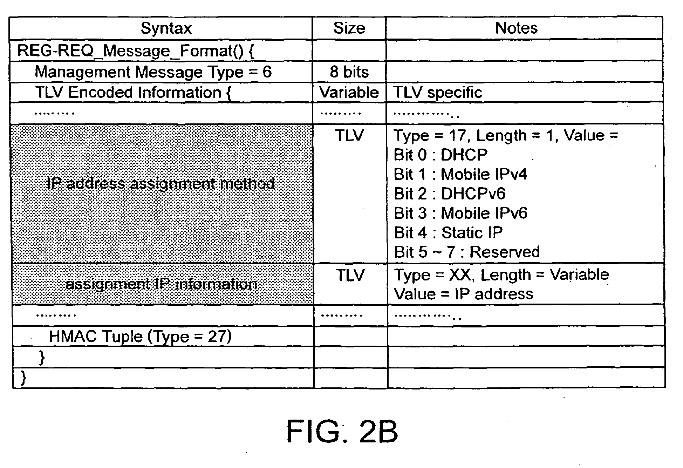

The format of the registration request message of the embodiment while taking this point into consideration is illustrated in FIG. 2b. Referring to FIG. 2b, the field regarding the use of the static IP address is defined in the field regarding the IP address assignment method. Further, the registration request message additionally includes an IP address information field having the type and length of an IP address, an actual IP address value, etc. The afore-described IP address information field may be an option field necessary only when the static IP address is used for the IP address assignment method.

As described above, the registration request message, having the format as illustrated in FIG. 2b is transmitted to the RAS 131, so that it is possible to use an IP address equal to that in the CDMA-2000 RAN 110, which is a network before interworking with the Portable Internet RAN 130, without reassignment of an IP address.

The PSS 100 of this embodiment uses a dual stack to simultaneously use the Portable Internet network and the CDMA-2000 network. The PSS 100 selects a network, which the PSS 100 will access, according to network access conditions, and this is accomplished according to received signal levels. Moreover, data applications of the PSS 100 support static and dynamic mobile IP functions so that a service currently being provided is not terminated even when an access network is altered. Further, a Point to Point Protocol (hereinafter, referred to as PPP) setup in this process is applied only to a mobile telephone call such as a CDMA-2000, and is not applied to a Portable Internet call.

When the PSS 100 accesses the Portable Internet RAN 130 from the CDMA-2000 RAN 110, the PSS 100 can transfer network information on the CDMA-2000 RAN 110 to the Portable Internet RAN 130.

The PSS 100 may include a PDA, a cellular phone, a Personal Communication Service (hereinafter, referred to as PCS) phone, a handheld PC, a GSM phone, a WCDMA phone, a CDMA-2000 phone, a Mobile Broadband System (hereinafter, referred to as MBS) phone, etc.

The BTS 111 of this embodiment corresponds to a network endpoint equipment for directly interworking with stations, which performs a baseband signal processing, a wire/wireless conversion, transmission/reception of radio signals, etc. The BTS 111 accepts call attempt of the PSS 100 through a traffic channel of signal channels, and transmits the accepted call attempt to the BSC 112.

The BSC 112 of this embodiment controls the BTS 111, and performs radio channel allocation and release for stations, transmit power control of stations and the BTS 111, determination of inter-cell soft handoff and hard handoff, transcoding and vocoding, a Global Positioning System (GPS) clock distribution, operation and maintenance for the BTS 111, etc.

The PCF 113 of this embodiment is connected to the BSC 112 and the PDSN 121, and sets/maintains/releases connection with the PDSN 121. The PCF 113 requests the BSC 112 to assign radio resources for transmission of packet data, and collects accounting information and transmits the collected accounting information to the PDSN 121. Further, the PCF 113 performs a buffering function and a state management function of the PSS 100 until packet data received from the PDSN 121 are transmitted to the PSS 100.

If a handoff call is received from the Portable Internet RAN 130, the BSC 112 and the PCF 113 of this embodiment look up an IP address for the ACR 132 by utilizing the access information of the Portable Internet RAN 130, and acquire IP information or transfer the access information of the Portable Internet RAN 130 to the PDSN 121.

The PDSN 121 of this embodiment performs a previous network identification function for the PSS 100, a PPP processing only for a CDMA 2000 call after discerning the CDMA 2000 call from a Portable Internet call, a DHCP server function for accomplishing an IP address assignment for the PSS 100, etc.

The HA 122 of this embodiment performs routing for transmitting packets from an external packet data service server such as the Internet 140, and the AAA 123 performs accounting for packet data used by the PSS 100 in cooperation with the RAS 131, and authenticates access from the PSS 100.

The RAS 131 of this embodiment transmits data, which are received from the ACR 132, to the PSS 100 in a wireless manner, and has a low power RF/IF module and controller function, an OFDMA/TDD packet scheduling and channel multiplexing function, a MAC frame variable control function according to service characteristics and radio wave conditions, a real-time control function of 50 Mbps grade high-speed traffic, a handoff function, etc.

If the PSS 100 accesses the Portable Internet RAN 130 from the CDMA-2000 RAN 110, the RAS 131 of this embodiment receives the registration request message from the PSS 100, and transfers the registration request message to the ACR 132, wherein the registration request message includes the IP assignment method information on a method by which an IP address has been assigned to the PSS 100 in the CDMA-2000 RAN 110, and the information on an IP address assigned to the PSS 100.

The ACR 132 of this embodiment corresponds to an access control router for accommodating the multiple RASs 131, has a handoff control function between the RASs 131, a handoff function between the ACRs 132, a packet routing function, an Internet access function, etc., and is connected to an IP network.

The ACR 132 of this embodiment receives the IP address information included in the registration request message from the RAS 131, and registers the IP address, which is being used by the CDMA-2000 RAN 110, as the IP address of the PSS 100 in the Portable Internet RAN 130 by means of the received IP address information.

Further, the ACR 132 of this embodiment of the present invention performs a function capable of discerning the originating call of the Portable Internet RAN 130 from a handoff call and processing the two types of calls. That is, the ACR 132 performs an IP-relating processing and data transmission for the originating call of the Portable Internet RAN 130, and supports connection with the PDSN 121 for the handoff call with the CDMA-2000 RAN 110. Furthermore, the ACR 132 according to the preferred embodiment of the present invention performs a Foreign Agent (FA) function for supporting a mobile IP operation.

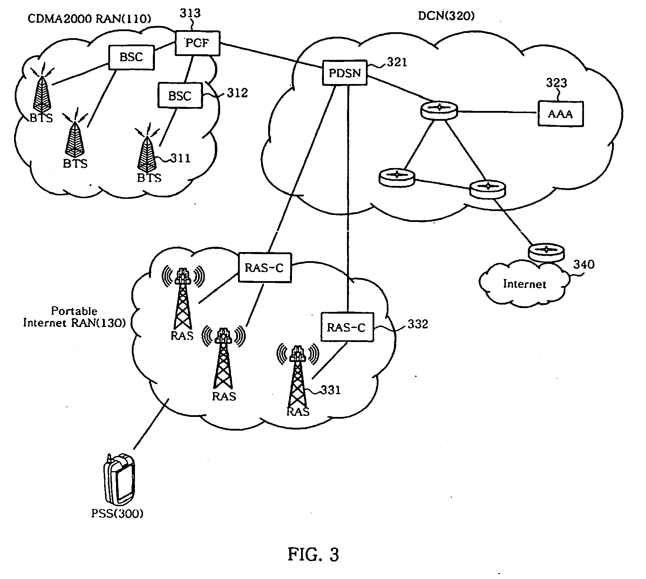

Referring to Fig. 3, a tightly-coupled interworking scheme is based on a CDMA-2000 RAN 310 and a Portable Internet RAN 330 interworking with each other by means of a simple IP address. A RAS-C 332 in FIG. 3 performs channel assignment and management of a RAS 331, and provides an interface for data call processing with a PDSN 321. Further, the PDSN 321 recognizes the RAS-C 332 as being identical to a BSC 313 of the CDMA-2000 RAN 310, and performs the data call processing.

The IP registration method described in FIG. 1 may be applied to both the loosely-coupled interworking scheme and the tightly-coupled interworking scheme in the same manner. Accordingly, a description about FIG. 3 will be replaced with the description of FIG. 1.

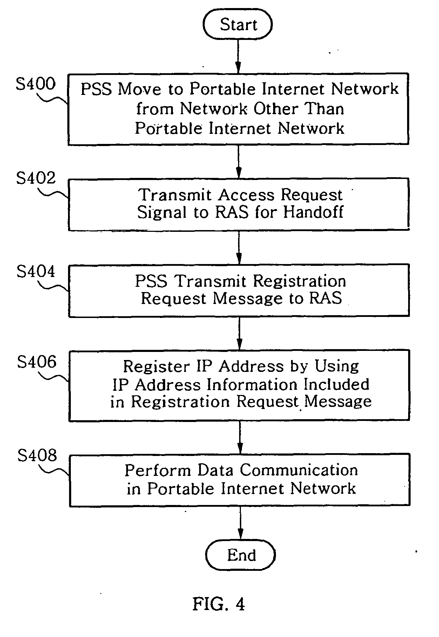

FIG. 4 is a flow diagram schematically illustrating a process for registering an IP address in a Portable Internet network when the Portable Internet network interworks with a different type of network.

First, the PSS 100 accesses the Portable Internet RAN 130 from a different type of network such as the CDMA-2000 RAN 110 (S400). The PSS 100 transmits an access request signal to the RAS 131 for handoff (S402). Herein, the PSS 100 transmits the registration request message as described above to the RAS 131 (S404), wherein the registration request message includes the IP assignment method information on a method by which an IP address has been assigned to the PSS 100 in the different type of network, and the information (IP address information) on an IP address assigned to the PSS 100.

The RAS 131 having received the registration request message transmits the IP assignment method information and the IP address information, which are included in the registration request message, to the ACR 132, and the ACR 132 registers the existing IP address by means of the received information (S406). That is, the ACR 132 maintains the existing IP address, instead of newly assigning an IP address.

If the ACR 132 succeeds in registering the existing IP address, the PSS 100 performs data communication through a session established by the Portable Internet RAN 130 (S408).

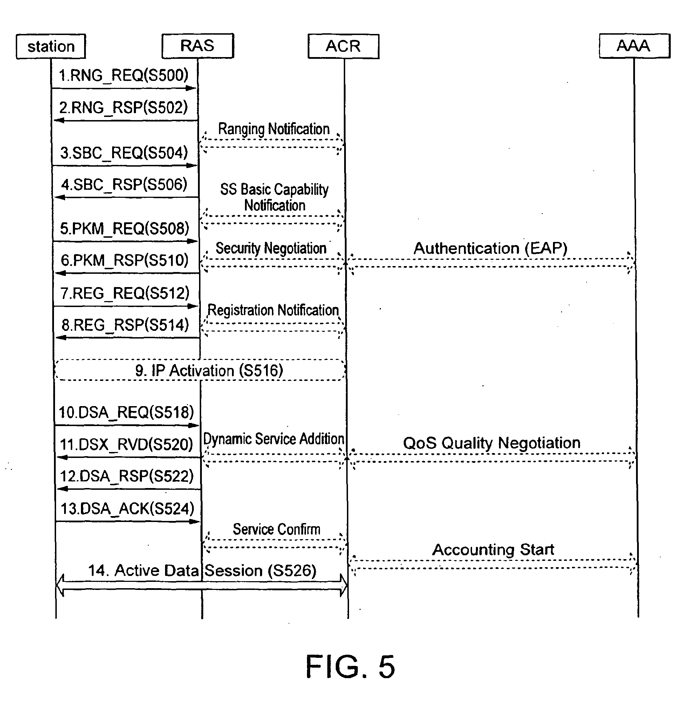

Referring to FIG. 5, first, the PSS 100 transmits an access request signal to the RAS 131 by means of an initial ranging Connection ID (CID) (S500). The RAS 131 transmits related parameters to the PSS 100 so that the PSS 100 can acquire channel information necessary for communication from the RAS 131 (S502).

The PSS 100 transmits station capability information to the RAS 131 (S504). Herein, the station capability information includes the basic CID of the PSS 100, parameters supportable by a physical layer, supportable bandwidth assignment parameters, a supportable authentication policy, etc. The RAS 131 transmits capability information, which the RAS 131 can accept, of the capability information provided by the PSS 100, to the PSS 100 (S506).

The PSS 100 transmits security and authentication request including security association, an authentication request, a security key request, an EAP transmission request, etc., to the RAS 131 (S508). The RAS 131 transmits a response for the request of the PSS 100 in cooperation with the AAA server 123 (S510).

The PSS 100 transmits a registration request message including an ARQ, an IP management mode, an IP version, a vendor ID, IP assignment method information, IP address information, etc., to the RAS 131 (S512). Herein, the PSS 100 modifies the registration request message so as to be suitable for the Portable Internet RAN 130 by means of a Previous Access Network ID (PANID) for the CDMA-2000 RAN 110, and transfers the modified registration request message to the RAS 131. The RAS 131 transmits station capability information and vendor information, which are available by the RAS 131, to the PSS 100, together with success or failure of the registration request (S514).

As described above, the IP address used in the previous network is also utilized in the Portable Internet network by means of the IP assignment method information and the IP address information included in the registration request message, so that the PSS 100 can maintain the existing IP address, instead of receiving a new IP address (S516).

The PSS 100 transfers the traffic characteristics of a service flow, scheduling requirements, a service flow convergence sub-layer parameter standard, etc., to the RAS 131 in order to add the service flow (S518). The RAS 131 notifies the PSS 100 that the RAS 131 has received such information (S520).

Then , the RAS 131 transmits the service flow parameters of requested transaction and the detailed convergence sub-layer parameters of the service flow to the PSS 100 (S522), and the PSS 100 confirms reception of these parameters (S524). The PSS 100 performs data communication through a session established through the steps as described above (S526).

The interworking function can be utilized regardless of the type of an interworking scheme such as the loosely-coupled interworking scheme and the tightly-coupled interworking scheme, which are described in the 3G-WLAN interworking scheme, and a smoothly-coupled interworking scheme having complemented these two interworking schemes.

As described above, when a Portable Internet network interworks with a different type of network, network interworking can be performed without change in an IP address used in a previous network, so that it is not necessary to change an IP address in a Portable Internet RAN. Accordingly, it is easy to construct the Portable Internet network. Further, service continuity is maintained in handoff, so that it is possible to provide convenience to subscribers.

The invention has now been described with reference to an example. The invention itself however is not restricted to the described features but is only limited by the following claims.

## Claims

1. A method for registering an IP address in a Portable Internet network (130) when the Portable Internet network (130) interworks with a different type of network (110), which enables a communication service to be continued without change in an Internet Protocol (IP) address of a personal subscriber station (100) when the personal subscriber station (100) moves from the different type of network (110) to the Portable Internet network (130), the method comprising the steps of:
(a) when the personal subscriber station (100) accesses the Portable Internet network (130) from the different type of network (110), receiving a registration request message from the personal subscriber station (100), the registration request message including a first field related to IP assignment method information by which an IP address has been assigned to the personal subscriber station (100) in the different type of network (110), and a second field related to IP address information on an IP address assigned to the personal subscriber station (100); and
(b) registering the IP address having been used by the different type of network (110) as the IP address of the personal subscriber station (100) in the Portable Internet network (130) by means of the IP address information included in the registration request message;
the method **characterized in that**
the first field includes at least an information regarding to the use of a static IP address,
the second field is used only when the IP assignment method is a static IP address assignment method.

2. A system for registering an IP address in a Portable Internet network (130) when the Portable Internet network (130) interworks with a different type of network (110), arranged to enable a communication service to be continued without change in an Internet Protocol (IP) address of a personal subscriber station (100) when the personal subscriber station (100) moves from the different type of network (110) to the Portable Internet network (130), the system comprising:
a radio access station (131) configured to receive a registration request message from the personal subscriber station (100) when the personal subscriber station (100) accesses the Portable Internet network (130) from the different type of network (110), the registration request message including a first field related to IP assignment method information by which an IP address has been assigned to the personal subscriber station (100) in the different type of network (110), and a second field related to IP address information on an IP address assigned to the personal subscriber station (100); and
an access control router (132) configured to receive the IP address information included in the registration request message from the radio access station (131), and arranged to register the IP address being used by the different type of network (110) as the IP address of the personal subscriber station (100) in the Portable Internet network (130) by means of the received IP address information,
the system **characterized in that**
the first field includes at least an information regarding the use of a static IP address,
the second field is used only when the IP assignment method is a static IP address assignment method.

3. The system as claimed in claim 2, further comprising the personal subscriber station (100) arranged to transmit the registration request message to the radio access station (131) when the personal subscriber station accesses the Portable Internet network (130) from the different type of network (110), the registration request message including the IP assignment method information and the IP address information.

4. The system as claimed in claim 2 or 3 wherein the personal subscriber station (100) utilizes a dual stack in order to simultaneously use the Portable Internet network (130) and the different type of network (110).

5. The system as claimed in claim 2 or 3 wherein the personal subscriber station (100) supports a static IP address, a dynamic IP address and/or a simple IP address.

6. The system as claimed in claim 2 applied to a loosely-coupled interworking scheme and a tightly-coupled interworking scheme, the loosely-coupled interworking scheme corresponding to an interworking scheme in a case where the Portable Internet network (130) and the different type of network (110) provide independent services, and the tightly-coupled interworking scheme corresponding to an interworking scheme in a case where the Portable Internet network (130) is one access network of the different type of network (110).

7. The system as claimed in claim 2 wherein the personal subscriber station (100) is arranged to transfer network information on the different type of network (110) when the personal subscriber station (100) accesses the Portable Internet network (130).

8. The system as claimed in claim 2 wherein the registration request message includes at least one of the IP assignment method information, the IP address information, ARQ information, IP version and vendor ID information.

9. The system as claimed in claim 2 or 8 wherein the IP assignment method information includes at least one of a Dynamic Host Configuration Protocol (DHCP), a mobile Ipv4, a DHCPv6, a mobile Ipv6 and a static IP address; and/or wherein the IP address information is one of the options when the IP assignment method is a static IP address.

10. The system as claimed in claim 2 wherein the different type of network (110) includes a CDMA-2000 network, a Global System for Mobile (GSM) network, a Wideband CDMA (WCDMA) network or a Wireless Local Access Network (WLAN).

11. The system as claimed in claim 2 wherein the access control router (132) is configured to perform a foreign agent function for supporting a mobile IP operation.

12. The method as claimed in claim 1, wherein the personal subscriber station (100) utilizes a dual stack in order to simultaneously use the Portable Internet network (130) and the different type of network (110).

13. The method as claimed in claim 1, wherein the personal subscriber station (100) supports a static IP address, a dynamic IP address and/or a simple IP address.

14. The method as claimed in claim 1, applied to a loosely-coupled interworking scheme and a tightly-coupled interworking scheme, the loosely-coupled interworking scheme corresponding to an interworking scheme in a case where the Portable Internet network (130) and the different type of network (110) provide independent services, and the tightly-coupled interworking scheme corresponding to an interworking scheme in a case where the Portable Internet network (130) is one access network of the different type of network (110).

15. The method as claimed in claim 1, wherein the personal subscriber station (100) transfers network information on the different type of network (110) when the personal subscriber station (100) accesses the Portable Internet network (130).

16. The method as claimed in claim 1, wherein the registration request message includes at least one of the IP assignment method information, the IP address information, ARQ information, IP version and vendor ID information.

17. The method as claimed in claim 1, wherein the IP assignment method information includes at least one of a Dynamic Host Configuration Protocol (DHCP), a mobile Ipv4, a DHCPv6, a mobile Ipv6 and a static IP address; and/or wherein the IP address information is one of the options when the IP assignment method is a static IP address.

18. The method as claimed in claim 1, wherein the different type of network (110) includes a CDMA-2000 network, a Global System for Mobile (GSM) network, a Wideband CDMA (WCDMA) network or a Wireless Local Access Network (WLAN).

19. The method as claimed in claim 1, wherein the access control router (132) is configured to perform a foreign agent function for supporting a mobile IP operation.

## Patentansprüche

1. Verfahren zum Registrieren einer IP-Adresse in einem mobilen Internet-Netzwerk (130), wenn das mobile Internet-Netzwerk (130) mit einem Netzwerk anderer Art (110) zusammenarbeitet, wobei es das Verfahren ermöglicht, einen Kommunikationsdienst ohne eine Änderung einer Internet Protocol-Adresse (IP-Adresse) einer persönlichen Teilnehmerstation (100) fortzusetzen, wenn sich die persönliche Teilnehmerstation (100) vom Netzwerk anderer Art (110) in das mobile Internet-Netzwerk (130) bewegt, wobei das Verfahren die folgenden Schritte aufweist:
(a) Empfangen einer Registrierungsanfragenachricht von der persönlichen Teilnehmerstation (100), wenn die persönliche Teilnehmerstation (110) vom Netzwerk anderer Art (110) auf das mobile Internet-Netzwerk (130) zugreift, wobei die Registrierungsanfragenachricht ein erstes Feld enthält, das eine Information über ein Verfahren zur IP-Zuweisung betrifft, an Hand dessen der persönlichen Teilnehmerstation (100) im Netzwerk anderer Art (110) eine IP-Adresse zugewiesen wurde, und ein zweites Feld, das eine IP-Adresse-Information über eine IP-Adresse, die der persönlichen Teilnehmerstation (100) zugewiesen wurde, betrifft; und
(b) Registrieren der IP-Adresse, die von dem Netzwerk anderer Art (110) als IP-Adresse der persönlichen Teilnehmerstation (100) verwendet wurde, im mobilen Internet-Netzwerk (130) mittels der in der Registrierungsanfragenachricht enthaltenen Information über die IP-Adresse;
das Verfahren **dadurch gekennzeichnet, dass**
das erste Feld zumindest eine Information bezüglich der Verwendung einer statischen IP-Adresse enthält,
das zweite Feld nur verwendet wird, wenn das Verfahren zur IP-Zuweisung ein Verfahren zur Zuweisung einer statischen IP-Adresse ist.

2. System zum Registrieren einer IP-Adresse in einem mobilen Internet-Netzwerk (130), wenn das mobile Internet-Netzwerk (130) mit einem Netzwerk anderer Art (110) zusammenarbeitet, wobei das System angeordnet ist, um es zu ermöglichen, einen Kommunikationsdienst ohne eine Änderung einer Internet Protocol-Adresse (IP-Adresse) einer persönlichen Teilnehmerstation (100) fortzusetzen, wenn sich die persönliche Teilnehmerstation (100) vom Netzwerk anderer Art (110) in das mobile Internet-Netzwerk (130) bewegt, wobei das System Folgendes aufweist:
eine Funkzugangsstation (131), die konfiguriert ist, um eine Registrierungsanfragenachricht von der persönlichen Teilnehmerstation (100) zu empfangen, wenn die persönliche Teilnehmerstation (110) vom Netzwerk anderer Art (110) auf das mobile Internet-Netzwerk (130) zugreift, wobei die Registrierungsanfragenachricht ein erstes Feld enthält, das eine Information über ein Verfahren zur IP-Zuweisung betrifft, an Hand dessen der persönlichen Teilnehmerstation (100) im Netzwerk anderer Art (110) eine IP-Adresse zugewiesen wurde, und ein zweites Feld, das eine IP-Adresse-Information über eine IP-Adresse, die der persönlichen Teilnehmerstation (100) zugewiesen wurde, betrifft; und
einen Router zur Zugangssteuerung (132), der konfiguriert ist, um die in der Registrierungsanfragenachricht enthaltene Information über die IP-Adresse von der Funkzugangsstation (131) zu empfangen, und angeordnet ist, um die IP-Adresse, die vom Netzwerk anderer Art (110) als IP-Adresse der persönlichen Teilnehmerstation (100) verwendet wurde, im mobilen Internet-Netzwerk (130) mittels der empfangenen Information über die IP-Adresse zu registrieren;
das System **dadurch gekennzeichnet, dass**
das erste Feld zumindest eine Information bezüglich der Verwendung einer statischen IP-Adresse enthält,
das zweite Feld nur verwendet wird, wenn das Verfahren zur IP-Zuweisung ein Verfahren zur Zuweisung einer statischen IP-Adresse ist.

3. System nach Anspruch 2, des Weiteren aufweisend die persönliche Teilnehmerstation (100), die angeordnet ist, die Registrierungsanfragenachricht an die Funkzugangsstation (131) zu übermitteln, wenn die persönliche Teilnehmerstation vom Netzwerk anderer Art (110) auf das mobile Internet-Netzwerk (130) zugreift, wobei die Registrierungsanfragenachricht die Information über das Verfahren der IP-Zuweisung und die Information über die IP-Adresse enthält.

4. System nach Anspruch 2 oder 3, wobei die persönliche Teilnehmerstation (100) einen Dual-Stack verwendet, um gleichzeitig das mobile Internet-Netzwerk (130) und das Netzwerk anderer Art (110) zu nutzen.

5. System nach Anspruch 2 oder 3, wobei die persönliche Teilnehmerstation eine statische IP-Adresse, eine dynamische IP-Adresse und/oder eine einfache IP-Adresse unterstützt.

6. System nach Anspruch 2, angewandt auf ein lose gekoppeltes Zusammenarbeitsschema und ein eng gekoppeltes Zusammenarbeitsschema, wobei das lose gekoppelte Zusammenarbeitsschema einem Zusammenarbeitsschema in einem Fall entspricht, in dem das mobile Internet-Netzwerk (130) und das Netzwerk anderer Art (110) unabhängige Dienste anbieten, und das eng gekoppelte Zusammenarbeitsschema einem Zusammenarbeitsschema in einem Fall entspricht, in dem das mobile Internet-Netzwerk (130) ein Zugangsnetzwerk des Netzwerks anderer Art (110) ist.

7. System nach Anspruch 2, wobei die persönliche Teilnehmerstation (100) angeordnet ist, um eine Netzwerkinformation über das Netzwerk anderer Art (110) zu übermitteln, wenn die persönliche Teilnehmerstation (100) auf das mobile Internet-Netzwerk (130) zugreift.

8. System nach Anspruch 2, wobei die Registrierungsanfragenachricht zumindest eine von Information über das Verfahren der IP-Zuweisung, Information über die IP-Adresse, ARQ-Information, Information über IP-Version und Vendor-ID enthält.

9. System nach Anspruch 2 oder 8, wobei die Information über das Verfahren der IP-Zuweisung zumindest eine von Dynamic Host Configuration Protocol (DHCP), einer mobilen IPv4, einer DHCPv6, einer mobilen IPv6 und einer statischen IP-Adresse enthält, und/oder wobei die Information über die IP-Adresse eine der Optionen ist, wenn das Verfahren zur IP-Zuweisung eine statische IP-Adresse ist.

10. System nach Anspruch 2, wobei das Netzwerk anderer Art (110) ein CDMA-2000-Netzwerk, ein Global System for Mobile-Netzwerk (GSM-Netzwerk), ein Wideband CDMA-Netzwerk (WCDMA-Netzwerk) oder ein Wireless Local Access Network (WLAN) einschließt.

11. System nach Anspruch 2, wobei der Router zur Zugangssteuerung (132) konfiguriert ist, um die Funktion eines Foreign Agents zum Unterstützen einer mobilen IP-Operation durchzuführen.

12. Verfahren nach Anspruch 1, wobei die persönliche Teilnehmerstation (100) einen Dual-Stack verwendet, um gleichzeitig das mobile Internet-Netzwerk (130) und das Netzwerk anderer Art (110) zu nutzen.

13. Verfahren nach Anspruch 1, wobei die persönliche Teilnehmerstation (100) eine statische IP-Adresse, eine dynamische IP-Adresse und/oder eine einfache IP-Adresse unterstützt.

14. Verfahren nach Anspruch 1, angewandt auf ein lose gekoppeltes Zusammenarbeitsschema und ein eng gekoppeltes Zusammenarbeitsschema, wobei das lose gekoppelte Zusammenarbeitsschema einem Zusammenarbeitsschema in einem Fall entspricht, in dem das mobile Internet-Netzwerk (130) und das Netzwerk anderer Art (110) unabhängige Dienste anbieten, und das eng gekoppelte Zusammenarbeitsschema einem Zusammenarbeitsschema in einem Fall entspricht, in dem das mobile Internet-Netzwerk (130) ein Zugangsnetzwerk des Netzwerks anderer Art (110) ist.

15. Verfahren nach Anspruch 1, wobei die persönliche Teilnehmerstation (100) angeordnet ist, um eine Netzwerkinformation über das Netzwerk anderer Art (110) zu übermitteln, wenn die persönliche Teilnehmerstation (100) auf das mobile Internet-Netzwerk (130) zugreift.

16. Verfahren nach Anspruch 1, wobei die Registrierungsanfragenachricht zumindest eine von Information über das Verfahren der IP-Zuweisung, Information über die IP-Adresse, ARQ-Information, Information über IP-Version und Vendor-ID enthält.

17. Verfahren nach Anspruch 1, wobei die Information über das Verfahren der IP-Zuweisung zumindest eine von Dynamic Host Configuration Protocol (DHCP), einer mobilen IPv4, einer DHCPv6, einer mobilen IPv6 und einer statischen IP-Adresse enthält, und/oder wobei die Information über die IP-Adresse eine der Optionen ist, wenn das Verfahren zur IP-Zuweisung eine statische IP-Adresse ist.

18. Verfahren nach Anspruch 1, wobei das Netzwerk anderer Art (110) ein CDMA-2000-Netzwerk, ein Global System for Mobile-Netzwerk (GSM-Netzwerk), ein Wideband CDMA-Netzwerk (WCDMA-Netzwerk) oder ein Wireless Local Access Network (WLAN) einschließt.

19. Verfahren nach Anspruch 1, wobei der Router zur Zugangssteuerung (132) konfiguriert ist, um die Funktion eines Foreign Agents zum Unterstützen einer mobilen IP-Operation durchzuführen.

## Revendications

1. Procédé pour enregistrer une adresse IP dans un réseau Internet portable (130) lorsque le réseau Internet portable (130) est en inter-fonctionnement avec un réseau d'un type différent (110), qui permet la continuation d'un service de communication sans modification de l'adresse de protocole Internet (IP) d'une station d'abonné personnelle (100) lorsque la station d'abonné personnelle (100) passe du réseau d'un type différent (110) au réseau Internet portable (130), le procédé comprenant les étapes suivantes :
(a) lorsque la station d'abonné personnelle (100) accède au réseau Internet portable (130) à partir du réseau d'un type différent (110), réception d'un message de demande d'enregistrement émanant de la station d'abonné personnelle (100), le message de demande d'enregistrement comprenant un premier champ relatif à une information sur un procédé d'affection IP grâce auquel une adresse IP a été affectée à la station d'abonné personnelle (100) dans le réseau d'un type différent (110), et un second champ relatif à une information d'adresse IP sur l'adresse IP affectée à la station d'abonné personnelle (100) ; et
(b) enregistrement de l'adresse IP ayant été utilisée par le réseau d'un type différent (110) comme étant l'adresse IP de la station d'abonné personnelle (100) dans le réseau Internet portable (130) au moyen de l'information d'adresse IP comprise dans le message de demande d'enregistrement ;
le procédé étant **caractérisé en ce que**
le premier champ comprend au moins une information concernant l'utilisation d'une adresse IP statique,
le second champ est utilisé uniquement lorsque le procédé d'affectation IP est un procédé d'affectation d'adresse IP statique.

2. Procédé pour enregistrer une adresse IP dans un réseau Internet portable (130) lorsque le réseau Internet portable (130) est en inter-fonctionnement avec un réseau d'un type différent (110), conçu pour permettre la continuation d'un service de communication sans modification de l'adresse de protocole Internet (IP) d'une station d'abonné personnelle (100) lorsque la station d'abonné personnelle (100) passe du réseau d'un type différent (110) au réseau Internet portable (130), le système comprenant :
une station d'accès radio (131) conçue pour recevoir un message de demande d'enregistrement émanant de la station d'abonné personnelle (100) lorsque la station d'abonné personnelle (100) accède au réseau Internet portable (130) à partir du réseau d'un type différent (110), le message de demande d'enregistrement comprenant un premier champ relatif à une information sur un procédé d'affection IP grâce auquel une adresse IP a été affectée à la station d'abonné personnelle (100) dans le réseau d'un type différent (110), et un second champ relatif à une information d'adresse IP sur une adresse IP affectée à la station d'abonné personnelle (100) ; et
un routeur de contrôle d'accès (132) configuré pour recevoir l'information d'adresse IP comprise dans le message de demande d'enregistrement émanant de la station d'accès radio (131), et conçu pour enregistrer l'adresse IP utilisée par le réseau d'un type différent (110) comme étant l'adresse IP de la station d'abonné personnelle (100) dans le réseau Internet portable (130) au moyen de l'information d'adresse IP reçue ;
le système étant **caractérisé en ce que**
le premier champ comprend au moins une information concernant l'utilisation d'une adresse IP statique,
le second champ est utilisé uniquement lorsque le procédé d'affectation IP est un procédé d'affectation d'adresse IP statique.

3. Système selon la revendication 2, comprenant en outre la station d'abonné personnelle (100) conçue pour transmettre le message de demande d'enregistrement à la station d'accès radio (131) lorsque la station d'abonné personnelle accède au réseau Internet portable (130) à partir du réseau d'un type différent (110), le message de demande d'enregistrement comprenant l'information sur le procédé d'affectation IP et l'information d'adresse IP.

4. Système selon la revendication 2 ou 3, dans lequel la station d'abonné personnelle (100) utilise une double pile afin d'utiliser simultanément le réseau Internet portable (130) et le réseau d'un type différent (110).

5. Système selon la revendication 2 ou 3, dans lequel la station d'abonné personnelle (100) prend en charge une adresse IP statique, une adresse IP dynamique et/ou une adresse IP simple.

6. Système selon la revendication 2 appliqué à un mécanisme d'inter-fonctionnement par couplage lâche et à un mécanisme d'inter-fonctionnement par couplage serré, le mécanisme d'inter-fonctionnement par couplage lâche correspondant à un mécanisme d'inter-fonctionnement dans lequel le réseau Internet portable (130) et le réseau d'un type différent (110) fournissent des services indépendants, et le mécanisme d'inter-fonctionnement par couplage serré correspondant à un mécanisme d'inter-fonctionnement dans lequel le réseau Internet portable (130) constitue l'un des réseaux d'accès au réseau d'un type différent (110).

7. Système selon la revendication 2, dans lequel la station d'abonné personnelle (100) est conçue pour transférer une information de réseau sur le réseau d'un type différent (110) lorsque la station d'abonné personnelle (100) accède au réseau Internet portable (130).

8. Système selon la revendication 2, dans lequel le message de demande d'enregistrement comprend au moins soit l'information sur le procédé d'affectation IP, soit l'information d'adresse IP, soit une information ARQ, soit une information sur la version IP et sur l'identité du fournisseur.

9. Système selon la revendication 2 ou 8, dans lequel l'information sur le procédé d'affectation IP comprend au moins soit un protocole de configuration dynamique de l'hôte (DHCP), soit un Ipv4 mobile, soit un DHCPv6, soit un Ipv6 mobile, soit une adresse statique IP ; et/ou dans lequel l'information d'adresse IP est l'une des options lorsque le procédé d'affectation IP est une adresse IP statique.

10. Système selon la revendication 2, dans lequel le réseau d'un type différent (110) comprend un réseau CDMA-2000, un réseau du système mondial de communications mobiles (GSM), un réseau CDMA à large bande (WCDMA) ou un réseau local sans fil (WLAN).

11. Système selon la revendication 2, dans lequel le routeur de contrôle d'accès (132) est configuré pour assurer une fonction d'agent étranger permettant la prise en charge du fonctionnement de l'IP mobile.

12. Procédé selon la revendication 1, dans lequel la station d'abonné personnelle (100) utilise une double pile afin d'utiliser simultanément le réseau Internet portable (130) et le réseau d'un type différent (110).

13. Procédé selon la revendication 1, dans lequel la station d'abonné personnelle (100) prend en charge une adresse IP statique, une adresse IP dynamique et/ou une adresse IP simple.

14. Procédé selon la revendication 1, appliqué à un mécanisme d'inter-fonctionnement par couplage lâche et à un mécanisme d'inter-fonctionnement par couplage serré, le mécanisme d'inter-fonctionnement par couplage lâche correspondant à un mécanisme d'inter-fonctionnement dans lequel le réseau Internet portable (130) et le réseau d'un type différent (110) fournissent des services indépendants, et le mécanisme d'inter-fonctionnement par couplage serré correspondant à un mécanisme d'inter-fonctionnement dans lequel le réseau Internet portable (130) constitue l'un des réseaux d'accès au réseau d'un type différent (110).

15. Procédé selon la revendication 1, dans lequel la station d'abonné personnelle (100) transfère une information de réseau sur le réseau d'un type différent (110) lorsque la station d'abonné personnelle (100) accède au réseau Internet portable (130).

16. Procédé selon la revendication 1, dans lequel le message de demande d'enregistrement comprend au moins soit l'information sur le procédé d'affectation IP, soit l'information d'adresse IP, soit une information ARQ, soit une information sur la version IP et sur l'identité du fournisseur.

17. Procédé selon la revendication 1, dans lequel l'information sur le procédé d'affectation IP comprend au moins soit un protocole de configuration dynamique de l'hôte (DHCP), soit un Ipv4 mobile, soit un DHCPv6, soit un Ipv6 mobile, soit une adresse statique IP ; et/ou dans lequel l'information d'adresse IP est l'une des options lorsque le procédé d'affectation IP est une adresse IP statique.

18. Procédé selon la revendication 1, dans lequel le réseau d'un type différent (110) comprend un réseau CDMA-2000, un réseau du système mondial de communications mobiles (GSM), un réseau CDMA à large bande (WCDMA) ou un réseau local sans fil (WLAN).

19. Procédé selon la revendication 1, dans lequel le routeur de contrôle d'accès (132) est configuré pour assurer une fonction d'agent étranger permettant la prise en charge du fonctionnement de l'IP mobile.
